# EUROPEAN PATENT SPECIFICATION

(11) **EP 1 551 635 B1**
(45) Date of publication and mention of the grant of the patent: **03.06.2009**
(21) Application number: 03793831.3
(22) Date of filing: 03.09.2003
(51) Int. Cl.: B41F 33/00, G01J 3/51

(54) **METHOD AND APPARATUS FOR ON-LINE MONITORING PRINT QUALITY**
VERFAHREN UND VORRICHTUNG ZUR ONLINE-ÜBERWACHUNG VON DRUCKQUALITÄT
PROCEDE ET APPAREIL POUR LE CONTROLE EN LIGNE DE LA QUALITE D'IMPRESSION

(30) Priority: 04.09.2002 FI 20021576
(43) Date of publication of application: 13.07.2005
(73) Proprietor: INSINÖÖRITOIMISTO DATA OY, 00810 Helsinki (FI)
(72) Inventor: HEIKKILÄ, Ismo, FIN-00430 Helsinki (FI); SEPPÄNEN, Jarmo, FIN-00250 Helsinki (FI)
(74) Representative: Salonen, Esko Tapani
(86) International application number: PCT/FI2003/000642
(87) International publication number: WO 2004/022342

(56) References cited:
- WO-A1-87/06190
- WO-A1-94/08791
- DE-A1- 3 218 166
- FI-B- 92 255
- SE-A- 9 800 327
- US-A- 4 881 181
- US-A- 5 854 680
- US-B1- 6 178 254
- PATENT ABSTRACTS OF JAPAN vol. 8, no. 215 (P-305) 02 October 1984 & JP 59 092 118 A (KITA DENSHI:KK) 07 June 1984
- DATABASE WPI Week 199946, Derwent Publications Ltd., London, GB; Class P74, AN 1999-549845 & SE 9 800 327 A (EPACT TECHNOLOGY AB) 06 August 1999

## Description

The invention relates to monitoring print quality in a printing press during production. The purpose of the invention is to provide an apparatus for measuring print quality, the measuring results of which apparatus can be used for adjusting and monitoring the print quality of a printing press and to detect defects both in the printing press and in print quality.

The arrangements of prior art are based, for example, on imaging performed by means of a linear or matrix camera, on an analysis made based on an image and on the use of the analysis results for monitoring and controlling a printing press. The applicant's patent FI 95888, equivalent US patent US 5,774,635, relates to these arrangements. Other applicants' US patents include, for example, US 5,724,259 and US 6,108,436. Devices of this kind for monitoring print quality are not yet available for newspaper printing presses, for other printing presses there are available finished systems. As compared with other printing presses, the newspaper printing presses generally have many wide paper webs and a fairly high speed, for example, 15 m/s. At the newspaper printing press, the edges of the product are not cut away, so possible test marks shall be inconspicuous. Moreover, since finished newspapers are sent immediately to the customer, late warnings of waste are of no use. Most prior art devices are based on different types of cameras and on image processing. In respect of these, accommodating the apparatus in connection with the printing press, the large amount of information to be processed with sufficient resolution, and achieving sufficient resolution cause problems. Traversing devices are not able to monitor quality simultaneously across the entire width of the web. The difficult elimination of scattered light is also a problem in implementations carried out with normal optics and cameras. A traversing measuring device may additionally allow a considerable amount of waste to pass through if an error occurs at times and only in part of a page.

Also such apparatuses that are not based on traversing measuring devices are known from prior art. This kind of apparatuses are disclosed e.g. in patent publications No. SE 9800327, WO 94/08791 and DE 3218166. These apparatuses or devices are though not modular by structure wherefore they are difficult to assemble in printing presses, they need a plenty of space etc. Same advantages as with the inventive apparatus and method are not achievable with these solutions.

An object of the invention is to achieve a system which measures the entire paper web being printed, which system can be used and put into use in a simple manner and the measurement results of which can be used for closed-loop control of the printing press and for waste warnings as well as for compilation of print run statistics. The apparatus is small in size and modular, in addition, some of the effect of scattered light and, for example, of the contamination of the optics by dirt has been eliminated as compared with the prior art.

The apparatus in accordance with the invention has good resolution in a longitudinal direction in order that the test marks be found reliably and a reliable measurement result be obtained to adjust colours based on a test mark. Transverse resolution is sufficient in respect of the width of inking zones for adjusting the colours and, in addition, sufficient for observing waste in real time so that every faulty page can be removed from production.

Advantageously, the system in accordance with the invention is modular. One exemplifying embodiment comprises three different modules. In the following, the invention is illustrated by means of figures.
Figure 1 shows the architecture of the measuring system as a block diagram.
Figure 2 shows a light source/detector pair of the measuring apparatus.
Figure 3 shows the optics of the measuring apparatus as viewed from above.
Figure 4a shows the sampling principle of the measuring apparatus during search for a gray bar.
Figure 4b shows the sampling of the measuring apparatus in respect of the gray bar and the rest of the page during normal operation.
Figure 5 shows examples of test marks used in measurement.
Figures 6a and 6b show measurement of a reflection profile and interpretation of measurement results in respect of one RGB detector.

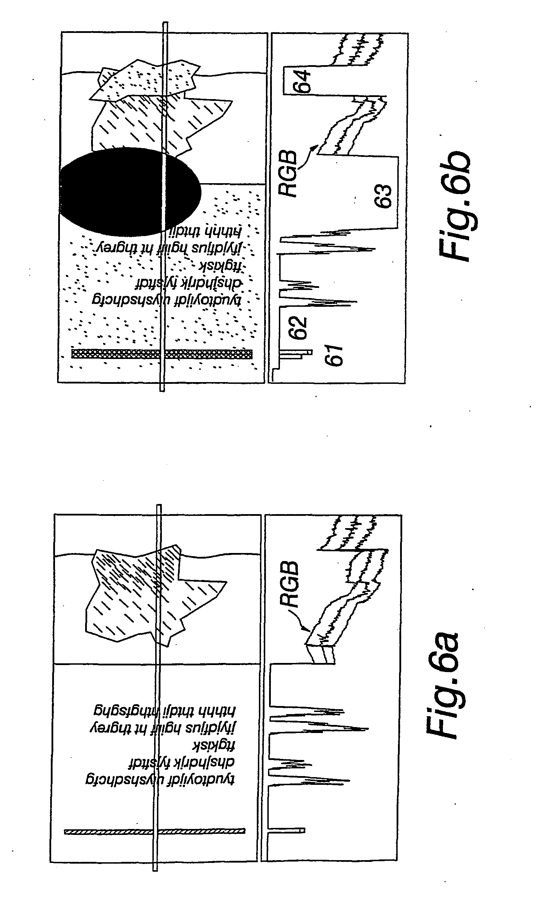

Figure 6a shows an accepted profile and the profile of Figure 6b shows a few changes in profile caused by a typical error.

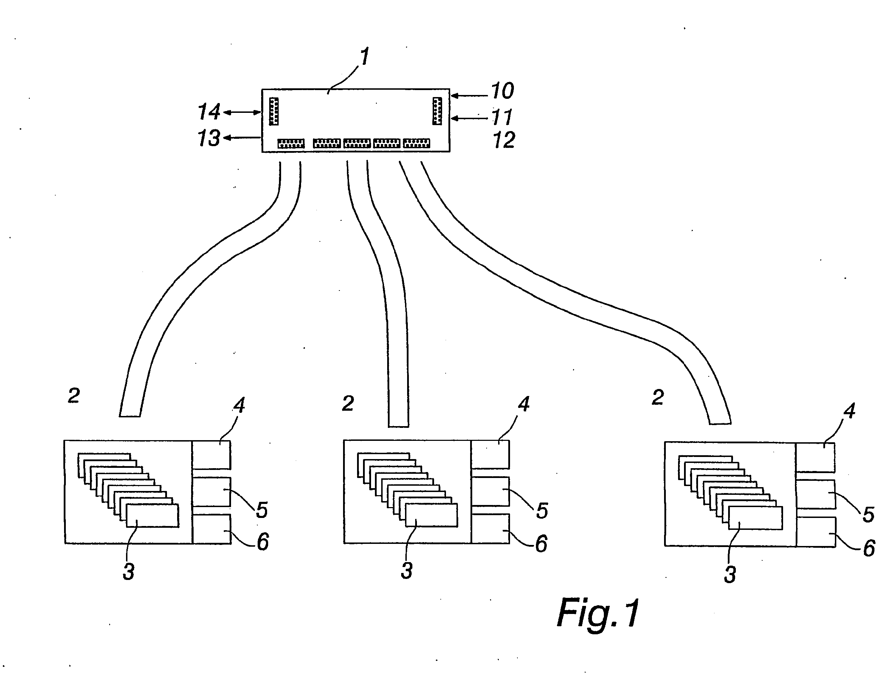

Fig. 1 clarifies the operation of the components of the measuring system. Its components are:

A distribution centre 1 is a centre of star-shaped cabling. The distribution centre 1 can be a centre that merely transmits signals to the control system of a printing press or in connection therewith there can be a PC that shows measurement results to the printer.

A measuring beam 2 is a mechanical beam that extends across the entire paper web. The beam also incorporates a connector card 4 with its connectors, a control computer 5, necessary current sources 6, a cooling means, and attachment parts for measuring modules 3.

The measuring module 3 is provided with light sources 22 (LED), detectors 23, and filters and optics needed in measurement. The module also has the electronics required for digitizing the measurement signal, a microprocessor, necessary memory circuits, and a data transmission bus for transferring measurement results to the control unit 5. A necessary number of measuring modules are attached to the measuring beam 2.

It is advantageous to distribute the data processing of the measuring system such that the measurement signals are analyzed in each module 3. In the normal operating situation, the modules 3 send merely analysis results to the control unit 5. This obviates the need for continuous transfer of a large amount of data so as to be processed centrally. The control unit 5 collects the results coming from the measuring modules 3 of one beam together and sends them further via the distribution centre 1 to a PC or to the automation system of the printing press. When needed, the system may have, for example, discrete control units for different paper webs or one unit takes care of the data processing of several measuring beams. The measuring of paper webs of different widths requires a different number of measuring modules in the measuring beam. By means of modularity it is possible to meet different needs at low costs.

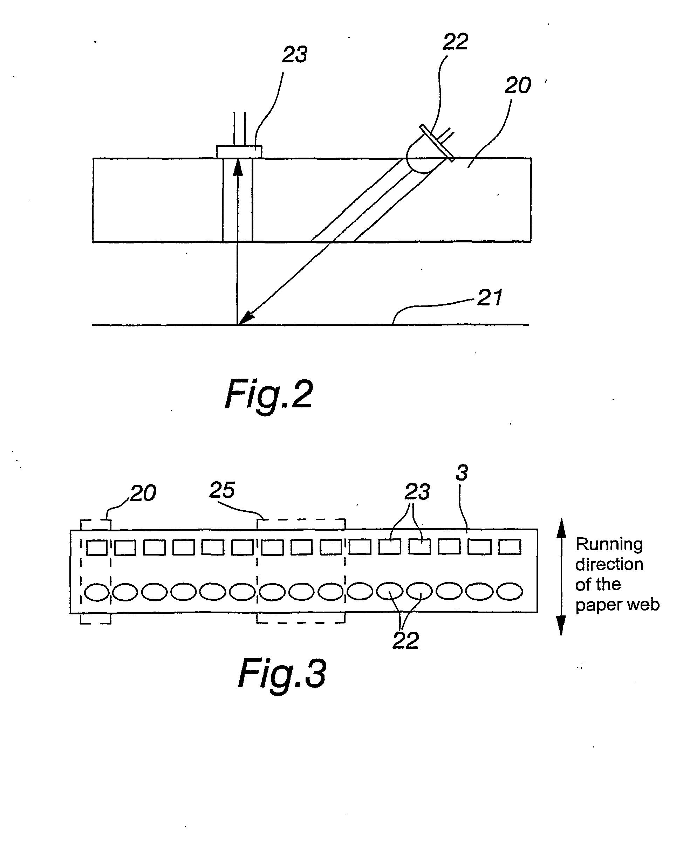

Fig. 3 shows an RGB measuring head 25 of the measuring module 3. The measuring head comprises three light source/detector pairs 20 shown in Fig. 2. For the light source 22 is advantageously used an LED and for the detector 23, for example, a photodiode or a phototransistor. As compared with commonly used known CCD detectors, the photodiode provides considerably better dynamics, the phase locking described later further improves the measuring dynamics attained because of the compensation of scattered light and because of thermal compensation. Phase locking is possible specifically because of the structure in accordance with the invention, for example, phase locking cannot be arranged with a normal matrix or linear camera at sufficient operating speed. In addition, in the case of a camera, the problems caused by scattered light are great even though it would be possible to use phase locking. Because of the reflections of the optics and of the CCD cell, over 1 % reflections result readily from other illuminated areas. The system in accordance with the invention avoids this problem. Moreover, it is possible to use filters and nonsimultaneous illumination by different measuring heads.

Fig. 2 is a side view from the direction of the edge of a paper web. Fig. 3 in turn shows a measuring module viewed from above or from below. The paper runs in the direction indicated by the arrow. The measuring module shown in Fig. 3 comprises five RGB measuring heads. One measuring module thus measures and monitors a 150 mm wide area on a printed page. The measuring modules are situated in succession on the measuring beam 2 extending across the paper web such that the entire paper web can be measured.

The print quality reflectivity measurement of the measuring head 25 is based on light source/detector pairs 20. A light source/detector pair is illustrated in Fig. 2. One pair measures one component colour and, thus, three light source/detector pairs 20 are required for making RGB measurement. The light source/detector pairs needed in making RGB measurement are called an RGB measuring head 25. One measuring head thus measures the reflectivity of red, green and blue light from the print. The output of the measuring head is constituted by three analog signals, which are proportional to the reflectivity of the print. The width of one measuring head is advantageously of the order of 30 mm at the most, and thus as wide as or narrower than the width of the inking zone of newspaper printing presses. The width of the measuring head determines the maximum resolution with respect to the transverse direction of the paper web, the narrower the measuring head, the higher the resolution that can be achieved in measurement. Because of ink adjustment, the width of the measuring head has to be equal to or narrower than that of the ink adjustment zone of the printing press. The same measuring head is also used for generating waste warnings.

For the sake of clarity, optics is not shown in the figures of the measuring head. A light beam can be collimated with lenses and in particular if all the light sources of the measuring module operate in the same phase, filters can be used in front of detectors to diminish the effect of scattered light from an adjacent light source. To keep any dirt carried with the flow of air away from the light travel path between the light source 22 and the detector 23, it is possible to use an air flow. This air flow is advantageously filtered air, the same air can be used for cooling. This too has not been shown in the figures.

The measuring module 3 makes use of phase locking in illumination and detection. Phase locking makes it possible to substantially reduce the effects of noise and also to eliminate the effect of ambient light on measurement results. The measuring technique also allows more than three detectors to be used in one module. In addition to the RGB detectors, the module may comprise, for example, a light source/detector pair that measures the reflection of red-green and blue-green light. As separate detectors it is also possible to use infrared and ultraviolet light for measurement. By this means, the assessment of the reflection spectrum is more accurate and, in addition, the spectrum can be measured within a wider wavelength range.

In phase locked measurement, the light source is switched on and off at a certain frequency. At receiving, the change in signal caused by this change is measured as locked to the phase of this switching. The method provides a considerable reduction in noise as compared with the CCD technique generally used. At the same time, the measuring errors caused by the dark current of the detector and ambient light are cancelled. Illumination is directed advantageously only at the area to be detected, so that the reflections outside the measurement area, coming from printed paper, cannot affect measurement. It is possible to illuminate adjacent areas at different times and measure a non-illuminated sample simultaneously with all detectors. By this means, the effect of adjacent light sources on measurement can be eliminated altogether. The minimization of the effect of light sources of different colours on the adjacent detector can be successfully accomplished simply by means of coloured filters. The illumination frequency that is used can be quite high when LEDs and fast photodiodes are used, whereby several samples are obtained for one area that is measured. The area to be measured is typically a test mark, white paper or an image detail. The samples can be detected, filtered and averaged either by an analog technique or by a digital technique. The averaging reduces measurement noise. Since the signals are processed locally, it is also easy to compensate for the effects of contamination on measurement dynamics. The goal of real-time operation is more easily achieved by local processing. The black level can be calibrated automatically due to the effect of phase-locked measurement, white can be calibrated as the highest value of the reflectivity measured from white paper from outside the area that is printed. In this connection, the handling of the error situations described later shall be taken into account. In fault situations it is not sensible to calibrate the system or perform any ink adjustments.

Note that the averaging of phase-locked measurement performed within one measurement point can also be advantageously carried out by the analog technique, for example, by means of an integrator, but the averaging of the measurement results of several pages is always performed digitally. The frequency of phase-locked measurement can also be equal to or higher than the measuring frequency of the reflection profile, advantageously a multiple thereof. The digital detection of the phase-locked signal can be accomplished simply by measuring, rapidly in succession, the amount of reflected light with the light source switched on and off. The signal itself is the difference between the measurement results. With the analog technique, detection can be performed prior to AD conversion. Thus, two samples are needed for one phase-locked measurement, one with the light source turned off and one with it turned on. One or more said phase-locked measurements can be averaged per one reflection intensity measurement. Phase-locked illumination can also be arranged such that the light is not turned off completely, but, instead, the change in the amount of the reflected light caused by a mere change in intensity is measured.

Calibration is performed continuously, otherwise, for example, when the paper roll after changing is darker than the preceding paper roll, the print would become lighter if the gray colour were adjusted to constant darkness only according to the test mark. The arrangement in accordance with the invention thus also measures the colour of paper from outside the printing area and is capable of adapting to the situation such that a change in paper tone does not cause an incorrect ink adjustment.

Advantageously, the measuring apparatus in accordance with the invention operates such that all real-time calculation is carried out in the measuring module 3. Transfer of large amounts of data is avoided by this system. The processor of the module reads the measuring signal coming from an AD converter, subjects it to digital filtering and calculates parameters from it, and averages and stores them. The averaged signal (page reflection profile) and the parameters are passed to a transfer buffer, from which they are passed to the control unit on request. This process operates all the time irrespectively of whether the control unit asks for data. Because of this principle of operation, the control unit always receives on its request the latest measurement results.

The measuring module also compares the longitudinal and transverse reflection profiles of the page measured and those of the reference page given and the parameters calculated from them. If the module finds that they differ from one another, it gives a binary waste alarm to the control unit.

Optomechanics: The circuit board of the measuring module 3 and the LEDs 22 and the photodiodes 23 used in illumination and detection are attached to an optomechanic base. The base has the optics needed in illumination and detection. The base is attached to a measuring beam. The base is schematically shown using the reference numeral 20. The optics comprises known collimator tubes, slits and possibly lenses and filters.

Measuring beam: One measuring beam 2 typically has 6-11 measuring modules 3 depending on the width of the printing press. The measuring beam is as wide as or slightly wider than the printing press and it thus measures one side of the web. At the lower edge of the measuring beam (between the beam and the paper web) there can be a transparent protective window attached to the beam. An air flow can also be used to reduce contamination by dirt. The reflection properties of the protective window determine, for their part, the effect of scattered light. Scattered light can be reduced using shaped or coated glass. By means of shaping, coatings and glass thickness it is possible to affect the behaviour of the light coming from LEDs. It is advantageous to reduce reflections, for example, by bending the plastic window such that the light meets it perpendicularly, for reducing scattered light it is also possible to use sections inhibiting movements of non-desired light or division of the window into several parts.

Control unit 5: The control unit 5 receives measurement data from the modules along one or, when needed, two parallel data transmission lines (not shown in the figures). All measurement data are transferred, for example, along a bus (RS-485). The control unit 5 asks (master) a module 3 (slave) for data of the measuring head 25 desired by it, and the module 3 sends the requested data to the control unit. The request for measurement data does not initiate measurements in the module 3, but the module returns on request the latest measurement results located in the transfer buffer.

A second line between the modules 3 and the control unit 5 is an optional binary waste alarm line. If some module finds that the print includes waste, it can send a binary waste alarm pulse along this line to the control unit 5. An alarm can also be transferred along the above-mentioned data transmission line together with other measurement data, in particular if the automation system asks for measurement results at each revolution of the cylinder. A separate waste alarm line can be used because of the real-time operation requirement of the waste alarm: it must be possible to remove every defective newspaper from production. When the control unit has received a waste alarm pulse and opened a waste gate, it asks along the bus for additional information about the quality of waste. Because of the distributed and parallel data processing, a waste alarm goes out in practice directly after a defective part of a page has passed beneath the measuring apparatus. When needed, it is possible to await until after the edge of the page has passed to identify possible contamination of a lens or an equivalent flaw. Defective newspapers or printed sheets are removed through the waste gate from the production line. In this way, every page can be measured separately and all defective newspapers can be removed. From the viewpoint of the newspaper printing press, this is very important because advertisers may refer to a failed edition and require a reduction of payments. It must also be possible to bring the newspapers for delivery within minutes from production. A defective batch cannot be examined any more afterwards. Because of the delay of a traversing measuring apparatus, defective newspapers may get into the mailing system. It is difficult to remove these from the mailing system. The arrangement in accordance with the invention allows the waste copies to be removed from production as selected one by one.

In the following, concepts relating to operation are described before a detailed description of the operation.

Synchronizing pulse: The measuring module needs from outside two binary synchronizing pulses. One pulse controls sampling (about 10,000 pulses per an impression cylinder revolution) and the other pulse controls the processing of measurement data (one pulse per a cylinder revolution).

Waste alarm: One output of the measuring module is a binary waste alarm. The alarm is processed in the control unit.

Control of the waste and sample gate: A possible output of the control unit is direct control of the waste and sample gate without intervention of the automation system or the operator.

Automation system: The apparatus in accordance with the invention is connected with the automation system through the distribution centre by means of Ethernet or some other bus.

Console: A separate PC called a console can also be connected to the distribution centre. The measurement results and the maintenance user interface can be displayed, in addition to the automation system, or only on the monitor of the console.

The system comprises databases for statistics and reporting and for a technical log.

In the following, the operation of the programs located in different parts of the system is described.

Before measurement is started, the components and memory areas of the apparatus are initialized. In that connection, parameters are loaded from the control unit to the measuring modules, memory areas of the module are allocated and initialized. This initialization can also be performed on external command.

After start-up, the measuring points intended for adjustment of inking are searched for either in pre-press data or by analyzing reflection profiles in the longitudinal direction of the page. The first object of measurements is to find the moment when the printing plates open. After that, the apparatus starts an automatic search for printing test marks. The module measures one or more measuring heads at a time and when a required number of measurements have been summed, the profiles are passed to the transfer buffer for transfer to the control unit. If a sufficiently high sampling speed is used, all measurements can always be made with full measurement resolution and it is possible to measure with all measuring heads in a non-interlaced mode at the same time. It is also possible to measure in an interlaced mode in a horizontal direction, i.e. alternately with different measuring heads.

Once the test marks have been found, the apparatus analyzes and learns the values of the test marks, for example, their locations and quality of print, as well as darkness. At this stage, either the operator's approval of the print quality or information inferred from the pre-press data about the desired darkness and shape of the test mark is needed.

At the beginning of the printing process, the module stores the measurement results and the parameters calculated from them in the memory bank of the module for use as reference for subsequent comparison. Comparison is made both for the identification of waste and for the adjustment of print quality. Profiles are processed in the modules locally and they can be transferred to the control unit or to be processed by the automation system. As a result of local processing, parameters and alarm data are obtained for use for adjustment and for removal of waste from production. Measured profiles can be transferred from the module to other parts of the system and vice versa, thus allowing values to be fine-tuned in addition to mere measurement.

When reference measurement profiles and the limits of error are known by the modules, ink adjustment and normal printing operation are started. During normal operation, the printing press is in working order and in the print quality there are no flaws caused by operational malfunctions of the machine or by the start-up phase. The adjustment of inking is possible only based on the test marks visible during normal operation.

When the module is at the grey bar, it measures the profile of the page with one measuring head or, in an alternative arrangement, with all measuring heads at the same time. If only some of the measuring heads are used for measurement at a time, several measurements are needed for ink adjustment in order that the length of the entire gray bar shall be measured. This is, however, totally acceptable because the adjustment of inking in a printing press is not very quick. When a required number of measurements have been averaged, the measurement data and analysis results are transferred to the transfer buffer in order to be passed to the control unit. Averaging reduces measurement noise and random variation at the cost of speed, this being advantageous for calming the adjustment down and for making it more accurate. The measurement results available at each moment have thus already been pre-averaged.

When the module is not at the gray bar, it measures the reflection profile of the page alternately with all measuring heads. In that connection, a longer sampling interval is used than in the measurements made at the gray bar. The measurements made from successive cylinder revolutions are not averaged, but the results and the parameters calculated from them are immediately stored in the transfer buffer for transfer to the control unit. The intention is to achieve a sufficient accuracy and speed for the identification of waste. Thus, it is possible to perform sampling less frequently as compared with the measurement of a narrow test strip.

The operation of the measuring apparatus and the analysis of the measurement results are based on the measurement of a reflection profile extending over the entire dimensions of the page. As appears from the description of operation, the reflection profile can be measured in different fashions depending on what is being measured. In the case of test marks, it is important to achieve high resolution, while real-time operation is more important in the identification of waste. By means of an interlaced arrangement a full-resolution image is achieved during several successive revolutions as a combination of several revolutions. In that connection, real-time operation is thus realized in observing those flaws which are larger than the resolution of partial images. In other words, flaws extending over an area of several millimeters are found immediately in practice. From measurement made very frequently, suitable parameters, such as averages and modes, minimum and maximum values from the envelope, can also be calculated directly before the other type of processing of measurement data.

Areas covered by inking zones can be inferred from the results of measurement in the transverse direction of the web by analyzing the measurement results either from one measured page or from the data on many different printed copies.

Reflection profile measurement is based on sampling that is controlled by a synchronizing pulse obtained from the printing press. The pulse can be taken from the control system or, alternatively, a separate pulse transducer can be installed in the printing press. Samples are taken over the entire length of a cylinder revolution, the result thus being a reflection profile whose length is equal to that of a cylinder revolution. The sampling interval may be constant over the entire length of a cylinder revolution. It may also vary depending on the object of measurement or on the intended use of measurement results.

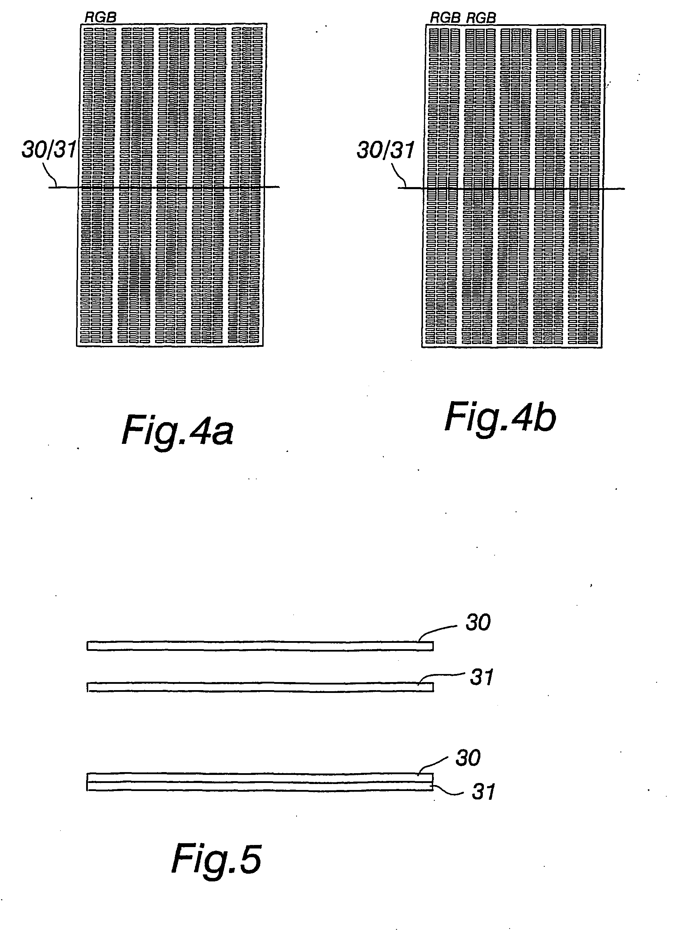

Fig. 4. Sampling. The measuring apparatus measures the entire cylinder revolution. The sampling of the apparatus depends on how the measurement results are used. When the apparatus looks for a gray bar, it uses a constant and fairly long sampling interval, Fig. 4a. In normal measurements, the sampling interval is shorter in the case of density measurements than in the case of waste measurements, as shown in Fig. 4b. At the gray bar it is necessary to interlace measurement for a period of several revolutions if the speed of the apparatus is not sufficient otherwise. However, since the adjustment of inking is considerably slower than one cylinder revolution, this slowness is not detrimental to the control of the printing press. Less frequent sampling is in turn sufficient for the identification of waste.

The measured reflection profile can be used for measuring print darkness. The measurement can be made from a separate test mark, from an image area or by estimating ink consumption from measurement results. Fig. 5 shows one test mark, a gray bar extending across the entire page. The width of said test mark is 1.7 mm and during one impression cylinder revolution two test marks are printed, single-colour gray and three-colour gray. The marks can be placed apart from or adjacent to each other. The mark can be placed on the top or bottom margin of the page, but also, among other things, in the frame of an image being printed.

Fig. 4 shows two test mark pairs used in the measurement of print darkness. During one cylinder revolution, two marks are printed, single-colour gray and three-colour gray. The marks can be printed together or apart. In newspapers, the mark is generally in the top or bottom margin of the page or it can also be as separators of images or texts. From the viewpoint of adjustment of inking, it is essential that the marks continue across the entire width of the printed area at some point of the printed material. It is also possible to use, for example, three-colour gray only in connection with images or, for example, as separators of texts. Normally, the newspaper may have measuring marks as thin strips in the bottom and top margins of the page. Three-colour and reference gray lines may also be located on different pages.

The measured reflection profile is used not only for making print darkness measurements but also for identifying different flaws in printing. The identification of defects is based on a reference profile. The profile is measured from a page the print quality of which has been approved. Alternatively, the profile can be analyzed from pre-press data. The profile is stored in the memory of the measuring module at the beginning of the printing process. All subsequent profile measurements are compared with the reference profile. Deviation of the measured profile from the reference profile indicates a flaw in print quality.

Deviation of the measured profile from the reference profile may also be caused by a sudden contamination of a lens. The measuring module assesses the cause of the flaw by examining the measured reflection profile. If the contrast of the reflection profile diminishes abruptly over the entire length of the profile (also outside printing surfaces), the flaw is likely to be caused by the contamination of the lens. In this case, the module sends a measurement error signal to the control unit. Otherwise the module sends a waste warning.

Fig. 6 shows examples of the identification of flaws from a measured reflection profile. The profiles of different colours corresponding to a page are shown underneath the page. Fig. 6a shows an accepted profile of a reference page. The curves under the images correspond to reflection profiles of different colours R G B. Various flaws can be identified from Fig. 6b: a register difference 61 in the printing of the test mark, wherefore the edges of the colour components in the gray bar ascend and descend at different points. Darkening 62 of white paper, wherefore the white colour does not receive full intensity, an ink blotch 63 which drops reflectivity to a level considerably lower than normal, the curves being thus down and the area without printing ink 64, which causes a white area, i.e. too high reflectivity. The defects can be observed readily from the reflection profiles. In a measurement situation, the latest reflection profile measured is compared with the reference profile measured and stored at the beginning of the printing process.

## Claims

1. An apparatus for measuring, in connection with a printing press, print quality of the printing press used in the production of.newspapers, which apparatus comprises a measuring beam (2) that extends across the width of the entire paper web (21) and on which measuring beam (2) several light source/detector pairs (20) are arranged, each of which light source/detector pairs (20) being provided with a light source (22) illuminating the moving paper web (21) and with a photo detector (23) measuring the light reflected from the surface of the paper web (21) and sent by the light source (22), **characterized in that** the light source/detector pairs (20) are arranged in measuring modules (3) attached to the measuring beam (2) the number of which measuring modules (3) being defined by the width of the paper web (21), and that the measuring beam (2) is provided with a control unit (5) to which the measuring modules (3) are connected by a data transmission bus, whereby the apparatus measures continuously during the running of the printing press and simultaneously substantially across the entire width of the paper web (21) several parallel reflection profiles that extend in the longitudinal direction substantially over the entire page, and uses the measurement results of the measuring apparatus in real time for the detection of waste and for the adjustment of inking in the printing press.

2. An apparatus as claimed in claim 1 for measuring print quality, **characterized in that** the apparatus is arranged to identify the normal operation of the printing press from reflection profiles measured substantially over the entire area of a page, and measure parameters needed in closed-loop control of the printing press only during said normal operation of the printing press, and at other times analyze from the measured reflection profiles only waste parameters, which are used to bring the printing press to normal operation.

3. An apparatus as claimed in claim 1 or 2 for measuring print quality, **characterized in that** the apparatus infers the locations of test marks used for closed-loop control from the measurement results of the reflection profiles substantially covering the entire page.

4. An apparatus as claimed in any one of claims 1 to 3 for measuring print quality, **characterized in that** the light source (22) used for measuring the reflection profile illuminates substantially only the area seen by each detector that measures reflection.

5. An apparatus as claimed in claim 4, **characterized in that** the light source (22) and the photo detector (23) operate as phase-locked.

6. An apparatus as claimed in claim 1 to 3 for measuring print quality, **characterized in that** the apparatus infers the validity of the measurement results for closed-loop control from the measurement results of the reflection profiles substantially covering the entire page.

7. An apparatus as claimed in any one of claims 1 to 4 for measuring print quality, **characterized in that** sampling is more frequent at the test marks than elsewhere.

8. An apparatus as claimed in any one of the preceding claims for measuring print quality, **characterized in that** the light sources (22) used for measuring the reflection profile are LEDs operating at different wavelengths.

9. A method for measuring and monitoring print quality of a printing press used in the production of newspapers using the apparatus of claim 1, wherein a moving paper web (21) is illuminated by means of light sources (22) and the light reflected from the surface of the paper web (21) and sent by the light sources (22) is measured by means of photo detectors (23), **characterized in that** the method determines reference profiles at the beginning of the printing process and measures reflection profiles during production substantially from the entire area of a page, in the longitudinal direction substantially over the entire page and substantially across the entire width of the paper web (21), the measuring and monitoring of the print quality during production being based on comparing the reflection profiles measured and the reference profiles and on calculating parameters, on the basis of which it is inferred as to when the operation of the printing press is normal, and during said normal operation the darkness of the print is measured from test marks or from another part representing a given darkness of the print, and inking in the printing press is adjusted based on the result of measurement.

10. A method as claimed in claim 9 for measuring and monitoring print quality based on reflection profiles, **characterized in that** the measurement of the reflection profiles is made as a sampling measurement such that sampling is more frequent at test marks than in the area of the rest of the page.

11. A method as claimed in claim 9 for measuring and monitoring print quality based on reflection profiles, **characterized in that** the reflection profiles are processed in parallel in several modules.

12. A method as claimed in any one of the preceding claims for measuring and monitoring print quality, **characterized in that** an accepted page indicated by the printer or inferred by the system or calculated from a pre-press data file is used as reference.

13. A method as claimed in any one of the preceding claims for measuring and monitoring print quality, **characterized in that** the cause of a flaw in print quality is inferred based on the measurement data of the reflection profile of a page, i.e. whether a flaw in print quality is caused by water marking, toning, ink blotches or by areas having too little printing ink.

14. A method as claimed in any one of the preceding claims for measuring and monitoring print quality, **characterized in that** the results of continuous profile measurement are used for assessing the condition of the printing press.

15. A method as claimed in any one of the preceding claims for measuring and monitoring print quality, **characterized in that** from the results of continuous profile measurement it is inferred at the beginning of printing as to when printing plates open and the measuring apparatus starts only after that an automatic search for test marks and possibly also informs the control and automation system of the printing press about the opening of the printing plates, for example, a device measuring a register difference, so that these can also start measurements and adjustment.

16. A method as claimed in any one of the preceding claims for measuring and monitoring print quality, **characterized in that** the results of continuous profile measurement are also used for analyzing failure of the printing press, for example, by means of recurrent darkness variations, among other things, bearing defects of the printing press, wear of a cylinder blanket or depression in cylinder blankets, uneven wear of printing plates, worn rollers or worn bearer rings are advantageously identified.

17. A method as claimed in any one of the preceding claims for measuring and monitoring print quality, **characterized in that** the results of continuous profile measurement are used for analyzing the printing of the test mark and if there are flaws in the printing of the test mark, such as a significant register difference, toning or ink blotches, the colour measurement system warns the printer and/or the automation system of a measurement error and stops closed-loop control of ink feed.

18. A method as claimed in any one of the preceding claims for measuring and monitoring print quality, **characterized in that** the results of continuous profile measurement are used for assessing failure of the measuring apparatus (self-testing) by also measuring non-printing areas, so that a permanently reduced contrast between white and black indicates contamination of the measuring apparatus.

19. A method as claimed in any one of the preceding claims for measuring and monitoring print quality, **characterized in that** the results of continuous profile measurement can be used in the calibration of the measuring apparatus such that the apparatus measures the reflection profile of the entire page, searches for and analyzes test areas and calibrates itself automatically.

20. A method as claimed in anyone of the preceding claims for measuring and monitoring print quality, **characterized in that** the results of continuous profile measurement are used for collecting production data, such as for measuring ink consumption and for analyzing production mode.

## Patentansprüche

1. Vorrichtung zum Messen - in Verbindung mit einer Druckpresse - von Druckqualität der Druckpresse, welche bei der Herstellung von Zeitungen verwendet wird, wobei die Vorrichtung einen Messbalken (2) umfasst, der sich über die Breite der gesamten Papierbahn (21) erstreckt und auf welchem Messbalken (2) mehrere Lichtquellen/Detektorpaare (20) angeordnet sind, wobei jedes von den Lichtquellen/Detektorpaaren (20) mit einer Lichtquelle (22), welche die sich bewegende Papierbahn (21) beleuchtet, und mit einem Fotodetektor (23) versehen ist, der das Licht, welches von der Fläche der Papierbahn (21) reflektiert wird und welches durch die Lichtquelle (22) gesendet wird, misst, **dadurch gekennzeichnet, dass** die Lichtquellen/Detektorpaare (20) in Messmodulen (3) angeordnet sind, welche am Messbalken (2) angebracht sind, wobei die Anzahl der Messmodule (3) durch die Breite der Papierbahn (21) bestimmt ist, und dass der Messbalken (2) mit einer Steuereinheit (5) versehen ist, mit der die Messmodule (3) über einen Datenübertragungsbus verbunden sind, wobei die Vorrichtung fortlaufend während des Laufs der Druckpresse und simultan im Wesentlichen über der gesamten Breite der Papierbahn (21) mehrere parallele Reflexionsprofile misst, welche sich in der Längsrichtung im Wesentlichen über die gesamte Seite erstrecken, und die Messergebnisse der Messvorrichtung zur Erfassung von Ausschuss und zur Einfärbeeinstellung in der Druckpresse in Realzeit verwendet.

2. Vorrichtung nach Anspruch 1 zum Messen von Druckqualität, **dadurch gekennzeichnet, dass** die Vorrichtung eingerichtet ist, den Normalbetrieb der Druckpresse von Reflexionsprofilen zu identifizieren, die im Wesentlichen über die gesamte Fläche einer Seite gemessen werden, und Messparametem, welche in geschlossener Schleifensteuerung der Druckpresse lediglich während des Normalbetriebs der Druckpresse benötigt werden, und zu anderen Zeitpunkten von den gemessenen Reflexionsprofilen lediglich Ausschussparameter analysieren, die verwendet werden, die Druckpresse auf Normalbetrieb zu bringen.

3. Vorrichtung nach Anspruch 1 oder 2 zum Messen von Druckqualität, **dadurch gekennzeichnet, dass** die Vorrichtung die Stellen von Testmarkierurxgen, die für geschlossene Schleifensteuerung verwendet werden, von den Messergebnissen der Reflexionsprofile, welche im Wesentlichen die gesamte Seite überdecken, ableitet.

4. Vorrichtung nach einem der Ansprüche 1 bis 3 zum Messen von Druckqualität, **dadurch gekennzeichnet, dass** die Lichtquelle (22), die zum Messen des Reflexionsprofils verwendet wird, im Wesentlichen lediglich den Bereich, der durch jeden Detektor erkannt wird, der Reflexion misst, beleuchtet.

5. Vorrichtung nach Anspruch 4, **dadurch gekennzeichnet, dass** die Lichtquelle (22) und der Photodetektor (23) phasen-verriegelt arbeiten.

6. Vorrichtung nach Anspruch 1 bis 3 zum Messen von Druckqualität, **dadurch gekennzeichnet, dass** die Vorrichtung die Gültigkeit der Messergebnisse für geschlossene Schleifensteuerung von den Messergebnissen der Reflexionsprofile, die im Wesentlichen die gesamte Seite abdecken, ableitet.

7. Vorrichtung nach einem der Ansprüche 1 bis 4 zum Messen von Druckqualität, **dadurch gekennzeichnet, dass** Abtasten häufiger bei den Testmarken als anderswo vorkommt.

8. Vorrichtung nach einem der vorhergehenden Ansprüche zum Messen von Druckqualität, **dadurch gekennzeichnet, dass** die Lichtquellen (22), die zum Messen des Reflexionsprofils verwendet werden, LEDs sind, die bei unterschiedlichen Wellenlängen arbeiten.

9. Verfahren zum Messen und Überwachen von Druckqualität einer Druckpresse, die bei der Herstellung von Zeitungen verwendet wird, wobei die Vorrichtung nach Anspruch 1 verwendet wird, wobei eine sich bewegende Papierbahn mittels Lichtquellen (22) beleuchtet wird und das Licht, welches von der Fläche der Papierbahn (21) reflektiert wird und durch die Lichtquellen (22) gesendet wird, mittels Photodetektoren gemessen wird, **dadurch gekennzeichnet, dass** das Verfahren Referenzprofile am Beginn des Druckprozesses bestimmt und Reflexionsprofile während der Herstellung im Wesentlichen vom gesamten Bereich einer Seite in der Längsrichtung im Wesentlichen über die gesamte Seite und im Wesentlichen über die gesamte Breite der Papierbahn (21) misst, wobei das Messen und das Überwachen der Druckqualität während der Herstellung auf Vergleich der gemessenen Reflexionsprofile mit den Referenzprofilen basiert, und auf Berechnen von Parametern, auf der Basis von denen abgeleitet wird, wann der Betrieb der Druckpresse normal ist, und während des Normalbetriebs die dunkle Färbung des Drucks von Testmarkierungen oder von einem anderen Teil gemessen wird, der eine bestimmte dunkle Färbung des Drucks zeigt, und das Einfärben in der Druckpresse auf der Basis des Messergebnisses eingestellt wird.

10. Verfahren nach Anspruch 9 zum Messen und Überwachen von Druckqualität auf der Basis von Reflexionsprofilen, **dadurch gekennzeichnet, dass** die Messung der Reflexionsprofile als eine Abtastmessung so durchgeführt wird, dass Abtasten häufiger ist bei Testmarkierungen als im Bereich des Restes der Seite.

11. Verfahren nach Anspruch 9 zum Messen und Überwachen von Druckqualität auf der Basis von Reflexionsprofilen, **dadurch gekennzeichnet, dass** die Reflexionsprofile parallel in mehreren Modulen verarbeitet werden.

12. Verfahren nach einem der vorhergehenden Ansprüche zum Messen und Überwachen von Druckqualität, **dadurch gekennzeichnet, dass** eine akzeptierte Seite, welche durch den Drucker angezeigt wird oder durch das System abgeleitet wird oder von einer Vordruck-Datendatei berechnet wird, als Referenz verwendet wird.

13. Verfahren nach einem der vorhergehenden Ansprüche zum Messen und Überwachen von Druckqualität, **dadurch gekennzeichnet, dass** der Fall eines Fehlers in der Druckqualität auf der Basis der Messdaten des Reflexionsprofils einer Seite abgeleitet wird, d.h., ob ein Fehler in der Druckqualität durch Wassermarkierung, Farbtonung, Druckfarbenflecken oder durch Bereiche, die zuwenig Druckfarbe haben, verursacht wird.

14. Verfahren nach einem der vorhergehenden Ansprüche zum Messen und Überwachen von Druckqualität, **dadurch gekennzeichnet, dass** die Ergebnisse fortlaufender Profilmessung verwendet werden, um den Zustand der Druckpresse zu bewerten.

15. Verfahren nach einem der vorhergehenden Ansprüche zum Messen und Überwachen von Druckqualität, **dadurch gekennzeichnet, dass** von den Ergebnissen fortlaufender Profilmessung am Anfang des Druckens abgeleitet wird, wann Druckplatten öffnen und die Messvorrichtung lediglich danach eine automatische Suche nach Testmarkierungen beginnt und möglicherweise auch das Steuerungs- und Automationssystem der Druckpresse über das Öffnen der Druckplatten informiert, beispielsweise eine Einrichtung, die eine Registerdifferenz misst, so dass diese ebenfalls Messungen und Einstellung beginnen können.

16. Verfahren nach einem der vorhergehenden Ansprüche zum Messen und Überwachen von Druckqualität, **dadurch gekennzeichnet, dass** die Ergebnisse fortlaufender Profilmessung ebenfalls dazu verwendet werden, Fehlverhalten der Druckpresse zu analysieren, beispielsweise mittels wiederkehrender Dunkelfärbungsvariationen, unter anderen Dingen, Andruckfehler der Druckpresse, Verschleiß einer Zylinderdecke oder Eindrücke in Zylinderdecken, ungleiches Abnützen von Druckplatten, verschlissene Rollen oder verschlissene Tragringe vorteilhafterweise identifiziert werden.

17. Verfahren nach einem der vorhergehenden Ansprüche zum Messen und Überwachen von Druckqualität, **dadurch gekennzeichnet, dass** die Ergebnisse fortlaufender Profilmessung verwendet werden, das Drucken der Testmarkierung zu analysieren, und, wenn es Fehler beim Drucken der Testmarkierung gibt, beispielsweise eine signifikante Registerdifferenz, Farbtonung oder Druckfarbenflecken, das Farbmesssystem den Drucker und/oder das Automationssystem über einen Messfehler warnt und geschlossene Schleifensteuerung der Druckfarbenzufuhr stoppt.

18. Verfahren nach einem der vorhergehenden Ansprüche zum Messen und Überwachen von Druckqualität, **dadurch gekennzeichnet, dass** die Ergebnisse fortlaufender Profilmessung zum Bewerten von Fehlverhalten der Messvorrichtung (Selbsttestung) ebenfalls durch Messung von Nichtdruckbereichen verwendet werden, so dass ein permanent-reduzierter Kontrast zwischen weiß und schwarz Verunreinigung der Messvorrichtung zeigt.

19. Verfahren nach einem der vorhergehenden Ansprüche zum Messen und Überwachen von Druckqualität, **dadurch gekennzeichnet, dass** die Ergebnisse fortlaufender Profilmessung bei der Kalibrierung der Messvorrichtung verwendet werden können, so dass die Vorrichtung das Reflexionsprofil der gesamten Seite misst, nach Testbereichen sucht und diese analysiert und sich selbst automatisch kalibriert.

20. Verfahren nach einem der vorhergehenden Ansprüche zum Messen und Überwachen von Druckqualität, **dadurch gekennzeichnet, dass** die Ergebnisse fortlaufender Profilmessung zum Sammeln von Herstellungsdaten verwendet werden, beispielsweise zum Messen von Druckfarbenverbrauch und zum Analysieren des Herstellungsmodus.

## Revendications

1. Appareil pour mesurer, dans le cadre d'une presse d'impression, la qualité d'impression de la presse d'impression utilisée dans la production de journaux, lequel appareil comprend un faisceau de mesure (2) qui s'étend sur la largeur de l'entière bande de papier (21), faisceau de mesure (2) sur lequel plusieurs paires (20) source lumineuse/détecteur sont disposées, chacune de ces paires (20) source lumineuse/détecteur étant dotée d'une source lumineuse (22) éclairant la bande de papier (21) en déplacement et d'un photo détecteur (23) mesurant la lumière réfléchie à partir de la surface de la bande de papier (21) et envoyée par la source lumineuse (22), **caractérisé en ce que** les paires (20) source lumineuse/détecteur sont disposées en modules de mesure (3) attachés au faisceau de mesure (2), le nombre de ces modules de mesure (3) étant défini par la largeur de la bande de papier (21), et **en ce que** le faisceau de mesure (2) est doté d'une unité de commande (5) à laquelle les modules de mesure (3) sont connectés par un bus de transmission de données, ce par quoi l'appareil mesure de façon continue pendant le fonctionnement de la presse d'impression et de façon simultanée sensiblement sur toute la largeur de la bande de papier (21) plusieurs profils de réflexion parallèles qui s'étendent dans la direction longitudinale sensiblement sur la totalité de la page, et utilise les résultats de mesure de l'appareil de mesure en temps réel pour la détection de déchets et pour le réglage de l'encrage dans la presse d'impression.

2. Appareil selon la revendication 1 pour mesurer la qualité d'impression, **caractérisé en ce que** l'appareil est arrangé pour identifier le fonctionnement normal de la presse d'impression à partir de profils de réflexion mesurés sensiblement sur toute la surface d'une page, et mesurer les paramètres nécessaires dans la commande en boucle fermée de la presse d'impression uniquement pendant ledit fonctionnement normal de la presse d'impression et, à d'autres moments, analyser, à partir des profils de réflexion mesurés, uniquement les paramètres de déchets qui sont utilisés pour amener la presse d'impression à un fonctionnement normal.

3. Appareil selon la revendication 1 ou 2 pour mesurer la qualité d'impression, **caractérisé en ce que** le papier déduit les emplacements des marques de test utilisées pour la commande en boucle fermée à partir des résultats de mesure des profils de réflexion recouvrant sensiblement la totalité de la page.

4. Appareil selon l'une quelconque des revendications 1 à 3 pour mesurer la qualité d'impression, **caractérisé en ce que** la source de lumière pour mesurer le profil de réflexion éclaire sensiblement uniquement la surface visualisée par chaque détecteur qui mesure la réflexion.

5. Appareil selon la revendication 4, **caractérisé en ce que** la source de lumière (22) et le détecteur de photos (23) fonctionnent en phase bloquée.

6. Appareil selon la revendication 1 à 3 pour mesurer la qualité d'impression, **caractérisé en ce que** l'appareil déduit la validité des résultats de mesure pour la commande en boucle fermée à partir des résultats de mesure des profils de réflexion recouvrant sensiblement toute la page.

7. Appareil selon l'une quelconque des revendications 1 à 4 pour mesurer la qualité d'impression, **caractérisé en ce que** l'échantillonnage est plus fréquent aux marques de test qu'ailleurs.

8. Appareil selon l'une quelconque des revendications précédentes pour mesurer la qualité d'impression, **caractérisé en ce que** les sources de lumière (22) pour mesurer le profil de réflexion sont des LED (diodes électroluminescentes) fonctionnant à différentes longueurs d'onde.

9. Procédé pour mesurer et contrôler la qualité d'impression d'une presse d'impression utilisée dans la production de journaux en utilisant l'appareil de la revendication 1, dans lequel une bande de papier (21) en déplacement est éclairée au moyen de sources de lumière (22) et la lumière réfléchie à partir de la surface de la bande de papier (21) et envoyée par les sources de lumière (22) est mesurée au moyen de photo détecteurs (23), **caractérisé en ce que** le procédé détermine des profils de référence au début du procédé d'impression et mesure les profils de réflexion pendant la production sensiblement à partir de toute la surface d'une page, dans la direction longitudinale sensiblement sur toute la page et sensiblement sur toute la largeur de la bande de papier (21), la mesure et le contrôle de la qualité d'impression pendant la production étant basés sur la comparaison des profils de réflexion mesurés et des profils de référence et sur le calcul de paramètres, sur la base desquels il est déduit quand le fonctionnement de la presse d'impression est normal, et pendant ledit fonctionnement normal, le foncé de l'impression est mesuré à partir de marques de test, ou à partir d'une autre partie représentant un foncé donné de l'impression, et l'encrage dans la presse d'impression est ajusté en fonction du résultat de mesure.

10. Procédé selon la revendication 9 pour mesurer et contrôler la qualité d'impression basé sur des profils de réflexion, **caractérisé en ce que** la mesure des profils de réflexion est réalisée en tant que mesure d'échantillonnage, de telle sorte que l'échantillonnage est plus fréquent au niveau des marques de test que dans la zone du reste de la page.

11. Procédé selon la revendication 9 pour mesurer et contrôler la qualité d'impression basé sur des profils de réflexion, **caractérisé en ce que** les profils de réflexion sont traités en parallèle dans plusieurs modules.

12. Procédé selon l'une quelconque des revendications précédentes pour mesurer et contrôler la qualité d'impression, **caractérisé en ce qu'**une page acceptée indiquée par l'imprimante ou déduite par le système ou calculée à partir d'un fichier de données de prépresse est utilisée comme référence.

13. Procédé selon l'une quelconque des revendications précédentes pour mesurer et contrôler la qualité d'impression, **caractérisé en ce que** la cause d'un défaut dans la qualité d'impression est déduite en fonction des données de mesure du profilé de réflexion d'une page, c'est-à-dire pour déterminer si un défaut dans la qualité d'impression est provoqué par un marquage d'eau, une nuance, des taches d'encre ou par des zones ayant trop peu d'encre d'impression.

14. Procédé selon l'une quelconque des revendications précédentes pour mesurer et contrôler la qualité d'impression, **caractérisé en ce que** les résultats de la mesure de profils continus sont utilisés pour déterminer la condition de la presse d'impression.

15. Procédé selon l'une quelconque des revendications précédentes pour mesurer et contrôler la qualité d'impression, **caractérisé en ce qu'**à partir des résultats de mesure de profilés continus, on déduit au début de l'impression le moment d'ouverture des plaques d'impression et l'appareil de mesure ne commence qu'après une recherche automatique de marques de test et, éventuellement, informe également le système de commande d'automatisation de la presse d'impression de l'ouverture des plaques d'impression, par exemple un dispositif mesurant une différence de repérage, de façon à pouvoir commencer les mesures et l'ajustement.

16. Procédé selon l'une quelconque des revendications précédentes pour mesurer et contrôler la qualité d'impression, **caractérisé en ce que** les résultats de mesure de profilés continus sont également utilisés pour analyser des pannes de la presse d'impression, par exemple au moyen de variations de foncé récurrent, parmi d'autres choses, des défauts de support de la presse d'impression, l'usure d'une chemise de cylindre ou des dépressions dans les plaques de cylindre, une mesure inégale des plaques d'impression, des rouleaux usés ou des anneaux de support usés sont avantageusement identifiés.

17. Procédé selon l'une quelconque des revendications précédentes pour mesurer et contrôler la qualité d'impression, **caractérisé en ce que** les résultats de la mesure de profils continus sont utilisés pour analyser l'impression de la marque de test et, dans le cas de présence de défauts dans l'impression de la marque de test, tels qu'une différence de repérage sensible, de nuance ou de tache d'encre, le système de mesure de couleur avertit l'imprimeur et/ou le système d'automatisation d'une erreur de mesure et arrête la commande en boucle fermée de l'alimentation d'encre.

18. Procédé selon l'une quelconque des revendications précédentes pour mesurer et contrôler la qualité d'impression, **caractérisé en ce que** les résultats de la mesure de profils continus sont utilisés pour déterminer la panne de l'appareil de mesure (test automatique) en mesurant également les zones de non-impression, de sorte qu'un contraste réduit en permanence entre le blanc et le noir indique une contamination de l'appareil de mesure.

19. Procédé selon l'une quelconque des revendications précédentes pour mesurer et contrôler la qualité d'impression, **caractérisé en ce que** les résultats de la mesure de profils continus peuvent être utilisés dans le calibrage de l'appareil de mesure, de façon que l'appareil effectue la mesure du profil de réflexion de la page entière, recherche et analyse les zones de test et calibre lui-même automatiquement.

20. Procédé selon l'une quelconque des revendications précédentes pour mesurer et contrôler la qualité d'impression, **caractérisé en ce que** les résultats de la mesure de profils continus sont utilisés pour recueillir des données de production telles que la mesure de la consommation d'encre et l'analyse du mode de production.
